# EUROPEAN PATENT SPECIFICATION

(11) **EP 2 848 456 B1**
(45) Date of publication and mention of the grant of the patent: **27.12.2017**
(21) Application number: 13384002.5
(22) Date of filing: 16.09.2013
(51) Int. Cl.: B60L 11/18, B60K 1/04, B62K 11/00

(54) **Electric motorcycle with a removable battery pack without lifting up**
Elektromotorrad mit abnehmbarem Batteriepack ohne Anheben
Motocycle électrique avec un bloc de batterie amovible sans se soulever

(43) Date of publication of application: 18.03.2015
(73) Proprietor: Sotelo Rosell, Carlos, 08014 Barcelona (ES)
(72) Inventor: Sotelo Rosell, Carlos, 08014 Barcelona (ES)
(74) Representative: Toro Gordillo, Ignacio Maria

(56) References cited:
- WO-A1-2007/119710
- DE-A1-102007 054 258
- DE-A1-102011 111 537
- JP-A- 2004 074 907

## Description

### Object of the invention

The following invention refers to an electric motorcycle. An electric vehicle with two or more wheels; the type which comprises a frame over which are found assembled at least: a steering front wheel, a matrix rear wheel powered up by an electric motor, a seat, and an electric battery for charging the motor through regulation and control means powered up by the user.

### Field of application of the invention

This invention is applicable in the field dedicated to the fabrication of electric vehicles and specifically of electric motorcycles.

### Background of the invention

Nowadays there is a growing tendency to the utilization of electric vehicles for the environmental advantages that their use provides, both in the level of contamination and the level of noise.

On of the inconvenient of electric motorcycles is the recharging of the batteries, specially in those countries were a massive implantation of these type of vehicles has not been made and a reduced amount of recharging points open to the public exist.

A possible solution to this inconvenience is that the user of the vehicle can extract the battery and take it to a charging point of particular use, for example the user' s own place of residence, office, etc.

This solution does not turn out to be useful since the batteries for this type of vehicles, with a power of 0.5 to 7 Kw.; have a high weight that can vary between 10 and 40 kilos, which is why its assembly and disassembly cannot be done in an easy and simple way.

Thus for example, document ES2297554 T describes an electric vehicle with a structure of battery assemblage, in which the battery is connected to the frontal frame of the motorcycle to provide power to the motor in such a way that multiple batteries, joined to the frame, are positioned in a circumferential direction, and where the radiating side of the battery is directly exposed to the running wind and where the space between each battery is wider in each inferior side to each superior side.

The disposition of these batteries, if an effective refrigeration is achieved, impedes the batteries from being disassembled by the own user to be transported to a charging point.

As mentioned previously, the weight of the batteries is high, therefore another problem to solve is finding an adequate arrangement to avoid the unbalance of the motorcycle.

*To solve the problems mentioned, invention patent* DE 102011111537 *is known, which discloses an electric motorcycle defining a buttery carrier that is removable by means of the* corresponding connection plugs which, although it includes an unfolding handle and supporting wheels for displacing the battery assembly upon releasing the motorcycle by simple traction of the handle and rolling of the assembly, this displacement is only possible after disconnecting and removing the batteries, such that, in order to perform this maneuver, the weight of said assembly must be borne by the user while being disconnected and lowered to the ground so that, while reducing the effort required to charge the batteries, it still requires significant physical effort corresponding to the aforementioned manoeuvre of lowering the trolley assembly with the batteries to the ground.

### Description of the invention

To solve the problems mentioned, an electric motorcycle, object of this invention, has been created, according to the claims. It presents a series of distinctive features oriented to facilitate the assembly and disassembly of the removable battery pack, without having the user bear weight and without the need to make significant efforts.

Another objective of the invention is to supply the electric motorcycle with means for the retention of the batteries in an assembly position and of electric connection, maintaining such means hidden and hosted in a compartment with dosing facility, such as the storage area located below the seat.

The disposition in the battery carrier of the lower set of supporting wheels, allows the battery carrier to be carried above the ground, in an easy and comfortable way, enabling this set of low supporting wheels, together with the lateral rails, the displacement of the battery carrier along the transversal rails arranged to such effect in the interior of the cavity of the motorcycle.

Both the transversal rails of the cavity of the motorcycle, and the lateral rails of the battery carrier, present characteristics oriented to allowing the user to introduce the lateral rails of the battery carrier between the transversal, upper and lower rails of the cavity of the motorcycle, without having to support the weight of the batteries and simply elevating the frontal extreme of the battery carrier, while it leans on the ground with the lower set of supporting wheels. The battery carrier can be in contact with the ground during the assembly, until its own weight is supported by the rails of the cavity of the motorcycle, and during the extraction of the battery carrier, it swings towards the posterior area to touch the floor before releasing itself from the transversal rails of the mentioned cavity.

The arrangement of the lateral rails of the battery carrier and the transversal rails of the motorcycle guarantees, once the lateral rails have been positioned between the transversal rails of the cavity of the motorcycle, that when frontally moving the battery carrier, it goes from an inclining position to a horizontal position of insertion.

To facilitate the grip and fastening of the battery carrier in an inclined position during the insertion or extraction in the cavity of the motorcycle, the unfolding handle is assembled with a possibility of lineal displacement and without possibility of swinging, regarding vertical rails located in the rear end of the battery carrier.

It is necessary to unblock the seat lock and to open it to have access to the lever that locks of frees the battery carrier.

We must mention that in this position of assembly the connection plugs of the battery carrier are placed establishing contact in the outlet located in the cavity of the motorcycle.

### Description of the figures

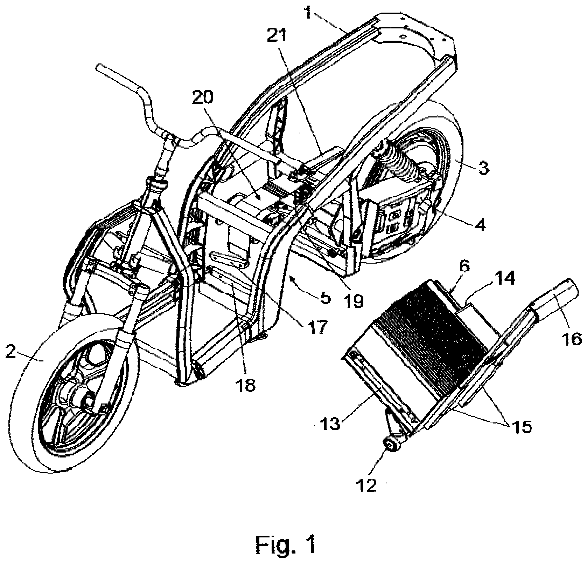

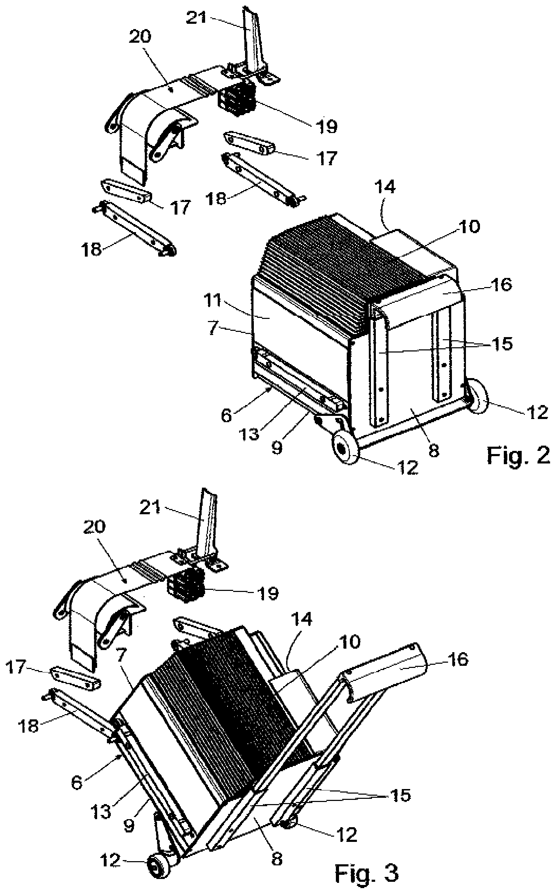

To complete the description and in order to facilitate the comprehension of the characteristics of this invention, we are attaching a set of drawings, in which, with illustrative character and not limitative character, the following has been shown:
▪ Figure 1 shows a simplified view, in perspective, of an example of realization of the electric motorcycle, in which the frame with the battery carrier, extracted from the defined cavity of the motorcycle for its accommodation, has been represented.
▪ Figure 2 shows a perspective view of the battery carrier with the handle folded and separated from the elements destined to fasten on the interior of the cavity of the motorcycle, for the railing, fastening and electric connection of the battery carrier in the assembly position.
▪ Figures 3, 4, 5 and 6 show a sequence of the assembly of the battery carrier in the cavity of the motorcycle that has been represented through the transversal rails of the fastening mechanism of the battery carrier in the operative assembly position and of the outlet for the connection plugs of the battery carrier.

### Preferred execution of the invention

In the example shown in Figure 1, it can be observed schematically an electric motorcycle, according to the invention, that comprises a frame (1) that defines a gap underneath the area of positioning of the seat, a steering front wheel (2), a matrix rear wheel (3) connected to an electric motor (4) and a cavity (5) located in a central position, in front of the rear wheel (3) and below the seat, for the assembly of a battery carrier (6).

This battery carrier (6) presents a front end (7), a rear end (8), a lower surface (9), an upper surface (10) and lateral surfaces.

The battery carrier (6) comprises a lower set of supporting wheels (12), lateral rails (13) for its assembly and disassembly in the cavity (5) of the motorcycle, connection plugs (14) oriented towards the front end (7) and its rear end (8), vertical rails (15), on top of which an unfolding handle (16) with lineal shifting possibility and without possibility of tilting is assembled.

The cavity (5) open towards one of the laterals of the motorcycle presents internally, lower and upper transversal rails (17, 18) for the displacement and fastening of the lateral rails (13) of the battery carrier (6) during the assembly and disassembly of the motorcycle.

The cavity (5) has an internal outlet (19) for the attachment of the connection plugs (14) of the battery carrier (6) when it reaches the assembly position.

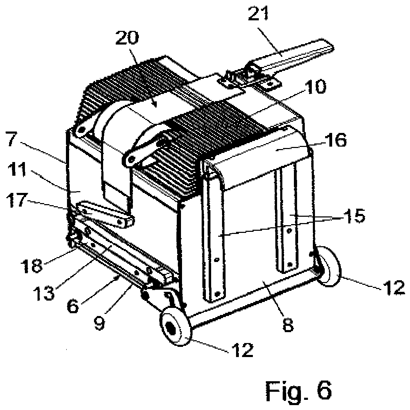

Inside the cavity (5), an arranged fastening mechanism can be found, that comprises a retention leash (20) of the battery carrier (6) in the operative assembly position, represented in Figure 6, and a lever (21), located in a defined cavity underneath the area of the seat of the motorcycle. It is necessary to unblock the seat lock and to open it to have access to the lever (21) of the mentioned retention leash.

To assemble the battery carrier (6) in the cavity (5) of the motorcycle, it is only necessary to incline it towards the rear zone pulling the handle, as shown in Figure 1, so that the front ends of the lateral rails (13) can be introduced between the upper and lower transversal rails (17, 18) of the cavity (5), while the set of supporting wheels (12) remains in contact with the ground.

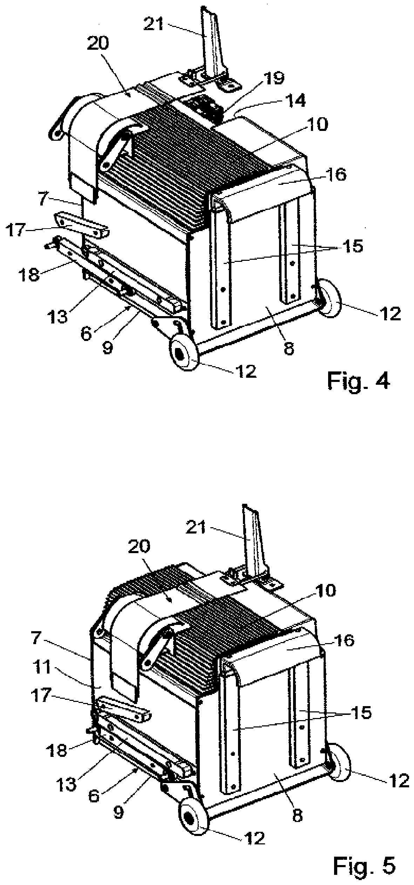

Once this position, represented in Figure 3 has been achieved, it is enough to push the battery carrier (6) towards the frontal area so that it moves longitudinally and it shifts to a horizontal position, represented in Figure 4, through the action of the descendant section of the upper and lower transversal rail (17) above the lateral rails of the battery carrier.

When the battery carrier (6) reaches the connecting position represented in Figure 5, it is enough to press the lever (21) towards the bottom so that the retention leash (20) acts upon the battery carrier (6), locking it into the operative connecting position shown in Figure 6, in which an electrical connection is established between the connection plugs (14) of the battery carrier (6) and the outlet (19) located in the interior of the cavity (5) of the motorcycle.

The battery carrier (6) can be extracted easily by inverting the order of the assembly movements described previously.

Once described sufficiently the nature of the invention, as well as an example of preferred realization, we must state to all effects that the materials, shape, size and disposition of the elements described can be modified, as long as it does not involve an alteration of the essential features of the invention that are asserted as follows.

## Claims

1. Electric motorcycle which, being of the type which comprises a frame (1) on which are assembled, at least: a steering front wheel (2), a matrix rear wheel (3) started up by an electric motor *(4)*, a seat and a battery or electric batteries for the charging of the motor (4) through regulation and control mechanisms managed by the user, wherein the battery or batteries are associated with a removable battery carrier (6) wherein the removable battery carrier (6) comprises a front end; a rear end, a lower surface, an upper surface and two lateral surfaces; and a corresponding unfolding handle (16) located at the rear end of said removable battery carrier (6), as well as a set of lower supporting wheels (12), and lateral rails (13) in a elevated plane from the supporting wheels (12) as well as connecting plugs facing towards the front end of the battery carrier, wherein the electric motorcycle is provided with a cavity (5) for the assembly the battery carrier (6) in the operate position, said cavity comprises transversal rails (17,18) for the displacement of the lateral rails (13) disposed on the battery carrier (6) during assembly and disassembly of the battery carrier in the motorcycle, said cavity (5) having an outlet (19) to connect the connection plugs of the battery carrier (6) in an operating assembly position and a fastening mechanism of the battery carrier (6) in an operating assembly position, **characterized in that** the transversal rails comprise upper rails (17) and lower rails (18) for supporting and displacing the lateral rails (13) of the battery carrier (6) during assembly and disassembly, having envisaged that said upper transversal rails (17) of the cavity (5) of the motorcycle will present at least one descendant section towards its front end.

2. Electric motorcycle, according to Claim 1, featuring the cavity (5) for the assembly of the battery carrier (6), which is located in the central area of the motorcycle, in front of the rear wheel (3), underneath the seat, and open towards one of the laterals of the motorcycle.

3. Electric motorcycle, according to any of the previous claims, **characterized in that** the lower transversal rails (18) of the cavity (5) are located at a height, with respect to a supporting plane of the wheels of the motorcycle, above the floor, inferior to the length of the battery carrier (6).

4. Electric motorcycle, according any of the previous claims, **characterized in that** the unfolding handle (16) is assembled with lineal shifting possibility and without possibility of tilting, with respect to the vertical rails (15) located on the rear end of the battery carrier (6).

5. Electric motorcycle, according any of the previous claims, **characterized in that** the fastening mechanism of the battery carrier (6) in an operative position, comprises a retention leash (20) of the battery carrier in such operative position and a movable lever (21) of the mentioned retention leash (20).

6. Electric motorcycle, according to claim 5, **characterized in that** the movable lever (21) is located in a defined cavity underneath the area of the seat of the motorcycle.

## Patentansprüche

1. Elektromotorrad mit einem Rahmen, (1) auf dem mindestens Folgendes montiert ist: ein Vorderlenkrad (2), eine Hinterradscheibe(3) die durch einen Elektromotor (4), gestartet wird, ein Sitz und ein Akku oder Elektroakku für die Aufladung des Motors (4) durch vom Benutzer zu bedienende Regulier- und Kontrollmechanismen, wobei der Akku oder die Akkus mit einer abnehmbaren Akkuhalterung verbunden sind (6) wobei die abnehmbare Akkuhalterung (6) aus einer Vorderseite, einem hinteren Ende, einer Unterseite, einer Oberseite und zwei seitlichen Flächen besteht; und einem dazugehörenden aufklappbaren Griff(16) am Ende der genannten abnehmbaren Akkuhalterung (6), sowie aus niedrigen Stützrädern (12) und seitlichen Schienen (13) in einer zu den Stützrädern erhöhten Ebene (12) sowie aus den Anschlusssteckern die zum vorderen Ende des Akkuträgers hin zeigen, wobei das Elektromotorrad mit einem Hohlraum (5) für die Montage der Akkuhalferung (6) in die Betriebsposition versehen ist, der genannte Hohlraum umfasst transversale Schienen (17,18) für die Verschiebung der seitlichen Schienen (13) an der Akkuhalterung (6) während der Montage und Demontage der Halterung am Motorrad bzw. im Hohlraum (5) mit einer Steckdose, (19) um die Anschlussstecker der Akkuhalterung (6) in der fertigen Betriebsposition und den Befestigungsmechanismus der Akkuhalterung (6) in Betriebsposition zu verbinden, **dadurch gekennzeichnet, dass** die transversalen Schienen die oberen Schienen (17) und niedrigen Schienen umfassen (18) um die seitlichen Schienen(13) der Akkuhalterung (6) bei der Montage und Demontage zu unterstützen und zu verschieben, wobei vorgesehen wurde, dass genannte obere transversale Schienen (17) des Hohlraums (5) des Motorrads mindestens einen fallenden Bereich in Richtung zu dessen vorderen Ende hin hat.

2. Elektromotorrad, gemäß Anforderung 1, mit Hohlraum (5) für die Montage der Akkuhalterung (6), die sich im zentralen Bereich des Motorrads befindet, genau gesagt vor dem Hinterrad (3), unter dem Sitz, und zu einem der Seitenteile des Motorrads hin geöffnet.

3. Elektromotorrad, gemäß einer der vorhergehenden Anforderungen, **dadurch gekennzeichnet, dass** die unteren transversalen Schienen (18) des Hohlraums (5) sich auf einer Höhe, unter Beachtung der unterstützenden Ebene der Räder des Motorrades über dem Boden, unterhalb der Längstseite der Akkuhalterung befinden(6).

4. Elektromotorrad, gemäß einer der vorhergehenden Anforderungen, **dadurch gekennzeichnet, dass** sich der aufgeklappte Griff (16) mit Möglichkeit zur linearen Verschiebung und ohne Möglichkeit des Kippens montiert ist, unter Beachtung der vertikalen Schienen (15) am hinteren Ende der Akkuhalterung(6).

5. Elektromotorrad, nach einer der vorhergehenden Anforderungen, **dadurch gekennzeichnet, dass** der Befestigungsmechanismus der Akkuhalterung (6) in einer Betriebsposition einen Befestigungsgurt (20) der Akkuhalterung in Betriebsposition und einen beweglichen Hebel (21) am genannten Befestigungsgurt umfasst(20).

6. Elektromotorrad, nach Anforderung 5, **dadurch gekennzeichnet, dass** der bewegliche Hebel (21) sich in einem festgelegten Hohlraum unterhalb der Fläche des Sitzes des Motorrads befindet.

## Revendications

1. Moto électrique qui, étant du type qui comprend un cadre (1) sur lequel sont assemblés, au moins : une roue avant de direction (2), une roue arrière matricielle (3) démarré par un moteur électrique (4), un siège et une batterie ou des batteries électrique pour la charge du moteur (4) par des mécanismes de régulation et de contrôle gérés par l'utilisateur, dans lesquels la ou les batteries sont associées à un support de batterie amovible (6) dans lequel le support de batterie amovible (6) comprend une extrémité avant, une extrémité arrière, une surface inférieure, une surface supérieure et deux surfaces latérales; et une poignée de dépliage correspondante (16) située à l'extrémité arrière dudit support de batterie amovible (6), ainsi qu'un ensemble de roues de support inférieures (12) et de rails latéraux (13) dans un plan surélevé par rapport aux roues de support (12) ainsi que des fiches de connexion tournées vers l'extrémité avant du support de batterie, la moto électrique étant munie d'un compartiment (5) pour l'assemblage du support de batterie (6) en position active, ledit compartiment comporte des rails transversaux (17)., 18) pour le déplacement des rails latéraux (13) disposé sur le support de batterie (6) lors du montage et du démontage du support de batteries dans la moto, ledit compartiment (5) avoir une sortie (19) connecter les fiches de connexion du support de batterie (6) dans une position d'assemblage de fonctionnement et un mécanisme de fixation du support de batterie (6) dans une position d'assemblage de fonctionnement, **caractérisé en ce que** les rails transversaux comprennent des rails supérieurs (17) et les rails inférieurs (18) pour supporter et déplacer les rails latéraux (13) du support de batterie (6) lors du montage et du démontage, ayant prévu que lesdits rails transversaux supérieurs (17) du compartiment (5) de la moto présentera au moins une section descendante vers son extrémité avant.

2. Moto électrique, selon la revendication 1, comportant le compartiment (5) pour l'assemblage du support de batteries (6), qui est situé dans la zone centrale de la moto, devant la roue arrière (3), sous le siège, et ouvert vers l'un des côtés de la moto.

3. Moto électrique, selon l'une quelconque des revendications précédentes, **caractérisée en ce que** les rails transversaux inférieurs (18) du compartiment (5) sont situés à une hauteur, par rapport à un plan de support des roues de la moto, au-dessus du sol, inférieure à la longueur du support de batterie (6).

4. Moto électrique, selon l'une quelconque des revendications précédentes, **caractérisée en ce que** la poignée de dépliage (16) est assemblé avec possibilité de mouvement linéaire et sans possibilité de basculement, par rapport aux rails verticaux (15) situé à l'arrière du support de batteries (6).

5. Moto électrique, selon l'une quelconque des revendications précédentes, **caractérisée en ce que** le mécanisme de fixation du support de batterie (6) dans une position active, comprend un cordon de rétention (20) du support de batterie dans une telle position active et un levier mobile (21) du cordon de rétention mentionné (20).

6. Moto électrique, selon la revendication 5, **caractérisée en ce que** le levier mobile (21) est situé dans un compartiment défini sous la zone de la selle de la moto.
